# EUROPEAN PATENT APPLICATION

(11) **EP 1 722 261 A1**
(43) Date of publication of application: **15.11.2006**
(21) Application number: 06113270.0
(22) Date of filing: 28.04.2006
(51) Int. Cl.: G02B 21/24

(54) **Microscope**

(30) Priority: 11.05.2005 CN 200510071298
(71) Applicant: Leica Microsystems Ltd., Shanghai, 201206 Shanghai (CN)
(72) Inventor: Zhu, Minghua, Shanghai (CN)
(74) Representative: Stamer, Harald

(57) **Abstract**

The present invention discloses a microscope and a focusing device for a microscope. The focusing device has at least one operating element attached to a first axle of the focusing device for effecting movement of a microscope stage along the optical axis of the microscope. An adjustable stop mechanism is provided which cooperates with the focusing device to limit the movement of the microscope stage in the direction of the optical axis. The adjustable stop mechanism comprises an adjustable screw and a pin cooperating with the adjustable screw and mounted to slide within a slot provided on the first gear wheel.

## Description

The invention relates to a microscope. In particular the invention relates to a microscope which has a height adjustable focusing device.

Microscopes are well known instruments. The focusing with upright microscopes is done by a change of the relative position of the sample on the microscope stage and the objective in the working position. This can be done by moving the turret or by moving the microscope stage on which the sample to be investigated is positioned. According to one embodiment the sample is positioned in a special slide or sample holder and the microscope stage is moved in the direction of the optical axis of the objective which is in the operating position. A focusing by moving the microscope stage is mainly done in upright microscopes.

The focusing is initiated by the user when using at least one of the operating elements provided at the microscope stand, which causes the microscope stage to move in the direction of the optical axis of the objective. In general the operating elements comprise an operating element for the fine focus and an operating element for the coarse focus. The operating elements are in the form of a rotating knob. Both rotating knobs are arranged on a common rotating axis. The rotational movement of either rotating knob is transferred into a linear movement of the microscope stage.

The operating element or the operating elements are provided at a fixed position at a side wall of the microscope stand. The operating elements are arranged at a certain distance from the support on which the microscope is placed. The arrangement of the operating elements is optimized for the average user. For users with large hands the arrangement of the operating elements is too low and for users with small hands the arrangement of the operating elements is too high. Consequently, the use of the microscope by a non-average user is not ergonomic, and is also fatiguing or may cause muscle tension. The German patent application DE 103 40 721.9 shows a focusing device which allows a height adjustment of the focusing device. As a consequence of the height adjustment the position of the operating elements at the side wall of the microscope is changed. The position of the operating elements is adjustable to the user's ergonomic requirements and/or preferences. It has not been previously appreciated that by changing the position of the operating elements the level of the microscope stage changes as well. The range of travel of the microscope stage is shifted and this may cause damage of the slide or the microscope objective.

The U.S. Patent Application, Application No. 10/810,336 discloses a focusing device arranged inside the microscope stand and at least one operating element is provided at a first and a second end of the focusing device each of which protrudes through a side wall of the microscope stand. The focusing device has an adjustable stop mechanism to limit the relative movement of the microscope stage in the direction of the optical axis. The adjustable stop mechanism comprises a plurality of parts and does not allow an easy an cost effective assembly.

It is a general object of the present invention to provide a microscope which is ergonomic to use for all users, avoids any potential damage to the microscope objective and/or the microscope slide and is of a simple and cost effective construction.

The object is achieved by a microscope comprising a microscope stand having side walls, a focusing device arranged inside the microscope stand and at least one operating element for focusing movably disposed at an end of the focusing device, the end of the focusing device protruding through a side wall of the microscope which is further comprising:
the focusing device having at least a first axle and a second axle, wherein the first axle carries at least a first gear wheel and the second axle carries at least a second gear wheel to transfer rotating movement from the first axle to the second axle;
- a slot formed in the second gear wheel on the second axle;
- a pin slidably mounted within said slot;
- an adjustable stop arranged on the focusing device so as to be contactable by the pin as to limit the relative movement of the pin.

A focusing device for the microscope comprises at least one operating element attached to a first axle of the focusing device for effecting movement of a microscope stage along an optical axis of the microscope and an adjustable stop mechanism cooperating with the focusing device to limit the movement of the microscope stage in the direction of the optical axis.

It is advantageous for the microscope to be provided with a focusing device arranged inside the microscope stand. The focusing device has at least a first axle and a second axle, wherein the first axle carries at least a gear wheel and the second axle carries at least one gear wheel to transfer rotating movement from the first axle to the second axle. A slot is formed in the gear wheel on the second axle. A pin is slide ably mounted within said slot. An adjustable stop is arranged on the focusing device so that it can be contacted by the pin.

The slot formed in the gear wheel on the second axle has the from of an arc, defining a first end and a second end, wherein both of which limit the sliding movement of the pin. The adjustable stop is formed by an adjustable screw mounted in a recess of the focusing device. The adjustable screw extends trough the focusing device, such that the pin can be in operational relationship with a top end and the bottom end of the adjustable screw. The pin slides in said slot while the adjustable screw is in contact with the pin and the pin not being in contact with the first end and the second end of the slot. The sliding movement of the pin is limited by the first end and the second end of the arc.

The microscope has at least one operating element which is provided at a first and a second end of the focusing device, each of which protrudes through a side wall of the microscope stand. A microscope stage is mounted moveably to the microscope stand. At least one objective is provided which defines in its working position an optical axis. Said at least one operating element of the focusing device effects a relative movement between the microscope stage and the objective. An elongated slot is provided at each side wall of the microscope stand which allows a change of the position of said at least one operating element in a horizontal and vertical direction. The focusing device is provided with a pivot axis around which the focusing device and consequently said at least one operating element is pivotable so that the position of the operating element is adjustable with respect to a side wall of the microscope stand.

The second axle carries a gear wheel arrangement which comprises a first gear wheel and a second gear wheel arranged coaxially and the first gear wheel has the slot and a larger diameter than the second gear wheel, wherein the rotational movement of the first axle is transferred by the first gear wheel to the gear wheel arrangement on the second axle.

A focusing device for a microscope has at least one operating element attached to a first axle of the focusing device for effecting movement of a microscope stage along an optical axis of the microscope. The first axle carries at least a gear wheel and the second axle carries at least one gear wheel to transfer rotating movement from the first axle to the second axle. A slot is formed in the gear wheel on the second axle. A pin is mounted to slide within said slot. An adjustable stop is provided on the focusing device and cooperating with the slide ably mounted pin.

The slot formed in the gear wheel on the second axle has the from of an arc, defining a first end and a second end, wherein both of which limit the sliding movement of the pin. The adjustable stop is an adjustable screw mounted in a recess of the focusing device and extending trough the focusing device, such that the pin can be in operational relationship with a top end and the bottom end of the adjustable screw. The pin slides in said slot while the adjustable screw is in contact with the pin and the pin not being in contact with the first end and the second end of the slot. The second axle carries a gear wheel arrangement which comprises a first gear wheel and a second gear wheel arranged coaxially. The first gear wheel has the slot and a larger diameter than the second gear wheel, wherein the rotational movement of the first axle is transferred by the first gear wheel to the gear wheel arrangement on the second axle. A gear wheel is formed on the first axle of the focusing device and a gear wheel arrangement is provided on a second axle. The pin is mounted at the periphery of the first gear wheel.

There are various ways of advantageously embodying and developing the teaching of the present invention. Reference is made to the drawings. In the drawings:
- ***Fig. 1***: shows a side view of a microscope in which the invention is embodied;
- ***Fig. 2***: shows a perspective view of the microscope, wherein several elements are not shown in order to better show the elements of the microscope which utilize the invention;
- ***Fig. 3***: shows an embodiment of a 3-dimensional view of the focusing device according to the present invention;
- ***Fig. 4***: shows the arrangement of the focusing device inside the microscope stand, wherein the pin is in contact with the upper side of the adjustable stop;
- ***Fig. 5***: shows the arrangement of the focusing device inside the microscope stand, wherein the pin is in contact with the under side of the adjustable stop;
- ***Fig. 6***: shows a side view of the gear wheel arrangement; and
- ***Fig. 7***: shows a plain view of the gear wheel arrangement.

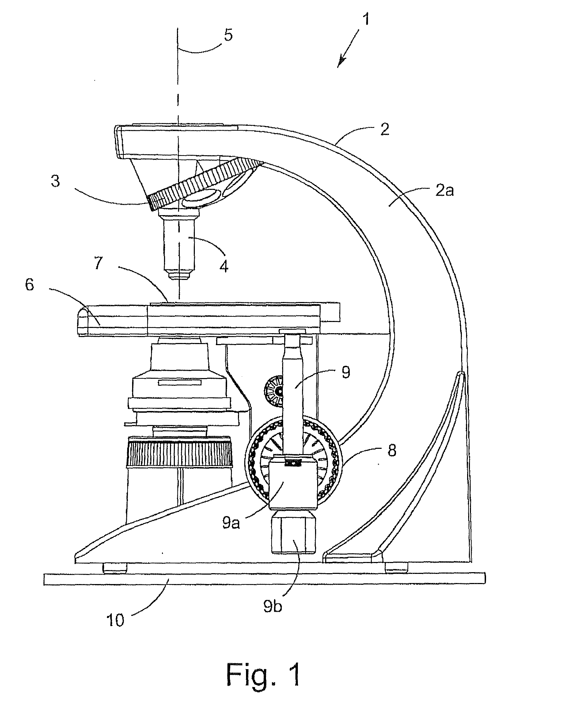

In the Figs. 1 to 7 similar elements are marked with the same reference numeral.

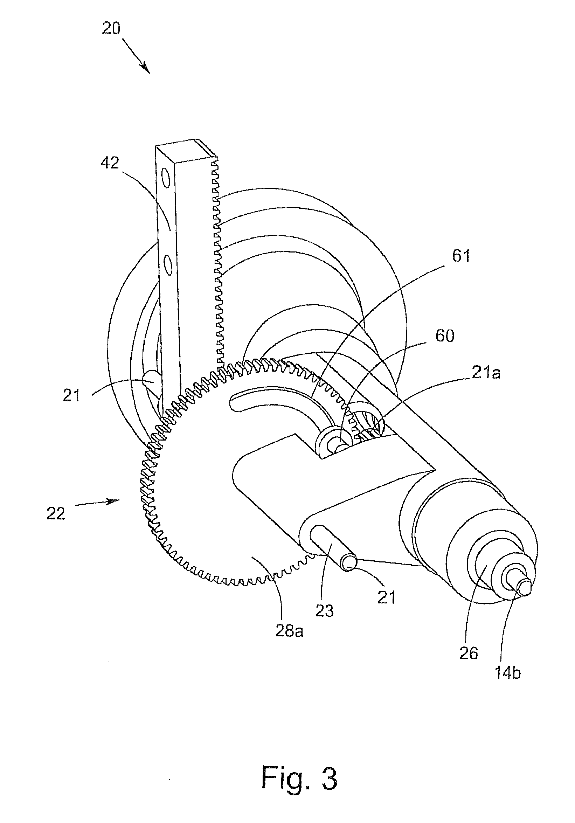

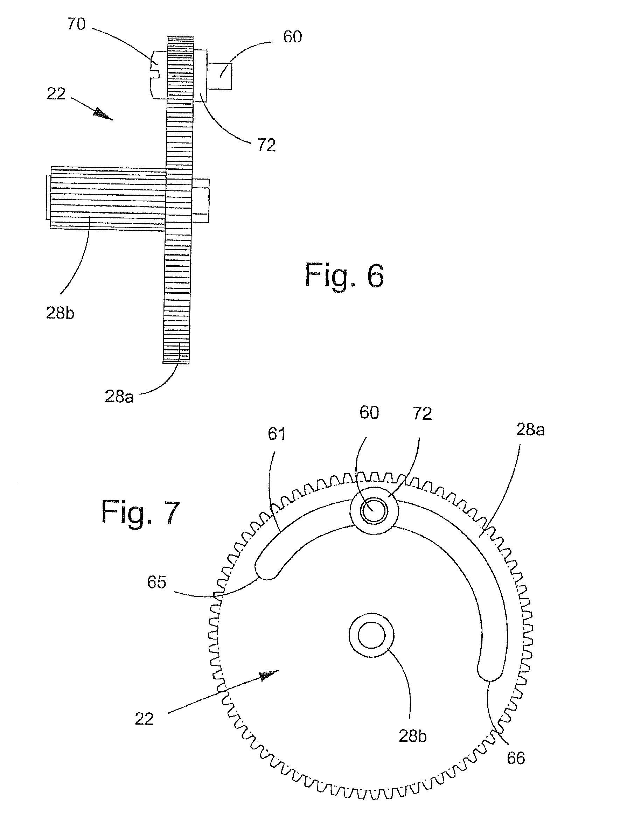

*Fig. **1*** shows a side view of microscope **1,** which embodies the teaching of the present invention. Microscope **1** has a microscope stand **2.** Microscope **1** is placed on support **10.** Additionally, turret **3** is provided at microscope stand **2,** wherein the turret carries at least one objective **4.** Objective **4** is moved by turret **3** into a working position. Objective **4** defines optical axis **5,** which is perpendicular to microscope stage **6,** when objective **4** is in the working position. On microscope stage **6** sample **7** to be investigated can be placed. Microscope **1** includes focusing device **20** (see ***Fig. 3**)*, which is used to bring sample **7** into focus. Focusing device **20** is mounted inside of microscope stand **2** (see ***Fig. 6 ).*** With this focusing device **20** microscope stage **6** can be moved relative to microscope stand **2** in the direction of optical axis **5** of objective **4.** Focusing device **20** carries two operating elements **8** (the side view of ***Fig**. **1*** shows only one operating element). Each operating element **8** is attached to one of two side walls **2a** and **2b** of microscope stand **2.** With these operating elements **8** the user can effect a positioning of microscope stage **6** in the direction of the optical axis. The positioning of microscope stage **6** results in focusing of sample **7** placed on microscope stage **6.** In front of operating element **8** positioning element **9** is provided. Positioning element **9** is connected to microscope stage **6** and enables a positioning of microscope stage **6** perpendicularly to optical axis **5,** which in turn enables a positioning of object **7** in the imaging field of objective **4.** Positioning element **9** has X-element **9a,** which enables positioning of microscope stage **6** in the X-direction. Additionally, positioning element **9** has a Y-element **9b,** which enables positioning of microscope stage **6** in the Y-direction.

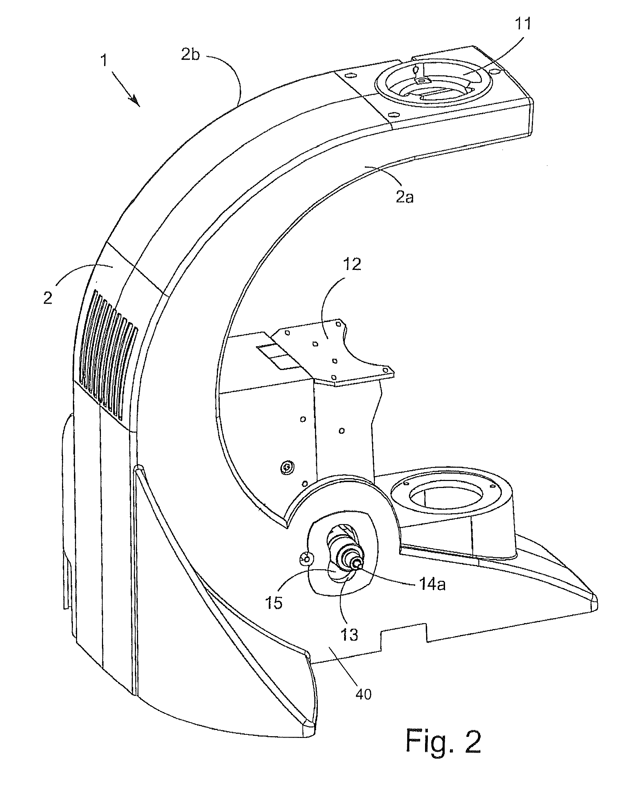

***Fig. 2*** provides a perspective view of microscope **1,** wherein several elements are not shown in order to obtain a better view of microscope stand **2.** Microscope stand **2** has a flange **11** for mounting a tube (not shown). In addition, microscope stand **2** includes mounting element **12** for microscope stage **6** (see ***Fig. 1**).* Mounting element **12** is moved by focusing device **20** parallel to optical axis **5** of objective **4** which is placed in the operating position. Inside microscope stand **2** focusing device **20** is mounted, wherein focusing device **20** has first end **14a** and second end **14b** (see ***Fig. 3**).* First and second ends **14a** and **14b** extend through opening **15,** which is formed in first and second side walls **2a** and **2b** of microscope stand **2.** As already mentioned in the description of ***Fig.** 1* operating element **8** is mounted at first end **14a** and at second end **14b.** In the embodiment as shown in ***Fig. 2*** opening **15** has the shape of a curved oblong hole, which is formed in opposing side walls **2a** and **2b** of the microscope stand **2.** It should be obvious to a person having ordinary skill in the art that opening **15** may as well be in the shape of a straight hole.

At least one operating element **8** is mounted to focusing device **20** and is operable positioned at side wall **2a** or **2b** of microscope stand **2.** A rotation of operating element **8** causes an upward or a downward movement of microscope stage **6.** Focusing device **20** which is positioned inside microscope stand **2** can be pivoted, which causes a movement of operating element **8** at side wall **2a** of microscope stand **2** away or towards base **40** on microscope stand **2.** According to the height adjustment of operating element **8** microscope stage **6** moves as well. Consequently, it becomes necessary that the travel of microscope stage **6** caused by the use of operating elements **8** is limited in order to avoid damage to a sample placed on microscope stage **6** or the objectives.

***Fig. 3*** shows a 3-dimensional view of focusing device **20** which is mounted inside of microscope stand **2.** Focusing device **20** defines pivot axis **23,** around which focusing device **20** can be pivoted. Focusing device **20** comprises two elongated bore holes **25** through which a pin of an axis (not shown in ***Fig. 3)*** is guided, with which focusing device **20** is mounted pivotable inside microscope stand **2.** A pivot axis **23** of focusing device **20** is coaxial with a second axle **21.** A first axle **26** is provided within the focusing device **20** and is parallel to the second axle **21.** The first axle **26** defines first and second ends **14a** and **14b,** to each of which operating element **8** of focusing device **20** is mounted. The rotating movement between first axle **26,** focusing device **20** and second axle **21** is transmitted without any slip. Accordingly, gear wheel arrangement **22** is fixed on second axle **21.** A plurality of gear teeth are formed at an area in the middle of first axle **26** and constitute first gear wheel **21a.** Gear wheel arrangement **22** comprises first gear wheel **28a** with a large diameter and second gear wheel **28b** with a small diameter. First gear wheel **28a** has a larger diameter than second gear wheel **28b.** Gear wheel arrangement **22** is mounted on second axle **21** of focusing device **20.** Second gear wheel **28b** transfers its rotational movement to a gear rack **42** which moves microscope stage **6** in the direction of optical axis **5.** Therefore, gear wheel arrangement **22** is mounted permanently on second axle **21.** Second gear wheel **28b** of gear wheel arrangement **22** is in engagement with gear rack **42.** A pin **60** is provided at the periphery of first gear wheel **28a** of gear wheel arrangement **22.** A slot **61** formed in the gear wheel **28a** on the second axle **21.**

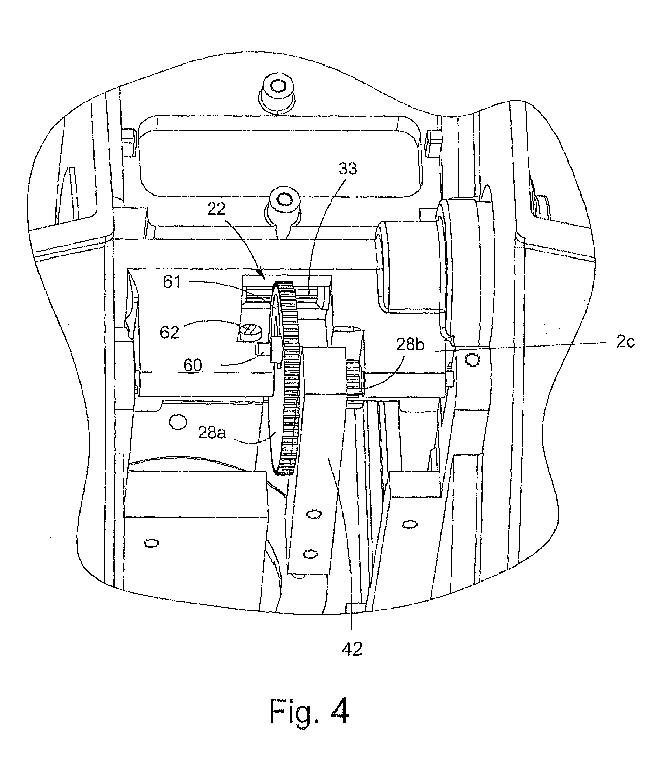

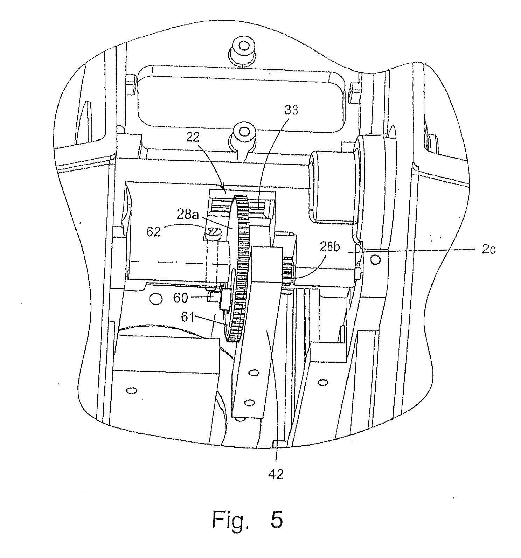

***Fig.* 4** shows the arrangement of the focusing device **20** in the interior **2c** of the microscope stand **2.** The focusing device **20** extends between the two opposing side walls **2a** and **2b** of the microscope stand **2.** The second gear wheel **28b** of gear wheel arrangement **22** is in engagement with gear rack **42.** The pin **60,** mounted slidably within said slot **61,** is in contact with an adjustable stop **62** on the focusing device **20.** The pin **60** is slidably mounted in said slot **61** formed in the gear wheel **28a** on the second axle **21.** The slot 61 has the form of an arc. The arc defines a first end **65** and a second end **66,** wherein both of which limit the sliding movement of the pin **60** while the pin **60** is in contact with the adjustable stop **62** provided on the focusing device **20.** The adjustable stop **62** comprises an adjustable screw, which is mounted in a recess **33** of the focusing device **20.** The adjustable stop **62** extents trough the focusing device**20,** such that the pin **60** can be in operational relationship with a top end (see ***Fig. 4*)** or a bottom end (see ***Fig. 5*)** of the adjustable screw.

***Fig. 5*** shows the arrangement of the focusing device **20** in the interior **2c** of the microscope stand **2.** The focusing device **20** extends between the two opposing side walls **2a** and **2b** of the microscope stand **2.** In the position, as shown in ***Fig. 4 ,*** the pin **60** can be in operational relationship with the bottom end of the adjustable screw. Once the pin 60 is in contact (bottom end or top end) with the adjustable screw the gear wheel **28a** is can still rotate until the pin **60** reaches the first end **65** or the second end **66** of slot **61.**

***Fig. 6*** shows a side view of gear wheel arrangement **22.** Gear wheel arrangement **22** comprises first gear wheel **28a** and second gear wheel **28b** both of which are arranged coaxially. First gear wheel **28a** has a larger diameter than second gear wheel **28b.** Pin **60,** which is positioned at the outer periphery of first gear wheel **28a.** The pin **60** is mounted to first gear wheel **28a** by nut **70** and a washer **72** so that the pin **60** can slide within slot **61.**

***Fig. 7*** shows a plan view of gear wheel arrangement **22.** Second gear wheel **28b** is provided at the side of first gear wheel **28a** which carries nut **70** for mounting pin **60.** Second gear wheel **28b** has approximately the length of the width of gear rack **42.**

## Claims

1. A microscope (1) comprising a microscope stand (2) with side walls (2a, 2b), a focusing device (20) arranged inside the microscope stand (2) and at least one operating element (8) for focusing movably disposed at an end of the focusing device (20), the end of the focusing device (20) protruding through a side wall (2a, 2b) of the microscope (1) which is **characterized by**:
the focusing device (20) having at least a first axle (26) and a second axle (21),
wherein the first axle (26) carries at least a first gear wheel (28a) and the second axle (21) carries at least a second gear wheel (28b) to transfer rotating movement from the first axle (26) to the second axle (21);
- a slot (61) formed in the second gear wheel (28b) on the second axle (21);
- a pin (60) slidably mounted within said slot (61);
- an adjustable stop (62) arranged on the focusing device (20) so as to be contactable by the pin (60) as to limit the relative movement of the pin (60).

2. The microscope as defined in Claim 1, wherein the slot (61) formed in the second gear wheel (28b) on the second axle (21) has the form of an arc, defining a first end and a second end, wherein both of which limit the sliding movement of the pin (60).

3. The microscope as defined in Claim 1 or 2, wherein the adjustable stop (62) is an adjustable screw mounted in a recess (33) of the focusing device (20) and extending through the focusing device (20), whereby the pin (60) is capable of contacting either a top end or a bottom end of the adjustable screw (2).

4. The microscope as defined in Claim 3,
wherein the pin (60) is configured to slide in said slot (61) while the adjustable screw (62) is in contact with the pin (60) and the pin (60) not being in contact with the first end and the second end of the slot (61).

5. The microscope as defined in Claim 1, 2, 3 or 4,
wherein the at least one operating element (8) includes a first operating element at a first end (14a) of the focusing device (20) and a second operating element at a second end of the focusing device (20).

6. The microscope as defined in Claim 1, further comprising
a microscope stage (6) moveably disposed on the microscope stand (2),
and at least one objective (4) defining, in a working position thereof, an optical axis (5),
wherein the at least one operating element (8) of the focusing device (20) is configured to effect a relative movement between the microscope stage (6) and the objective (4).

7. The microscope as defined in Claims 1 to 5,
wherein an elongated slot is provided at each side wall of the microscope stand which allows a change of the position of said at least one operating element in a horizontal and vertical direction.

8. The microscope as defined in Claim 1 to 7,
wherein the focusing device (20) is provided with a pivot axis around the focusing device together with the at least one operating element being pivotable about the pivot axis so as to adjust the position of the at least one operating element relative to the side wall of the microscope stand.

9. The focusing device as defined in Claim 1,
wherein the pin is mounted at the periphery of the first gear wheel 28a.

10. The microscope as defined in Claim 1,
wherein on the second axle (21) a gear wheel arrangement (22) is disposed which comprises a first gear wheel (28a) and a second gear wheel (28b) arranged coaxially, the first gear wheel having a larger diameter than the second gear wheel (28b).
